(19) **Europäisches Patentamt / European Patent Office / Office européen des brevets**

(11) **EP 4 431 983 A1**

(12) # EUROPEAN PATENT APPLICATION
published in accordance with Art. 153(4) EPC

(43) Date of publication:
**18.09.2024 Bulletin 2024/38**

(21) Application number: **22911016.8**

(22) Date of filing: **13.12.2022**

(51) International Patent Classification (IPC):
**G01S 13/86** (2006.01)    **F21S 45/00** (2018.01)
**G01S 7/481** (2006.01)    **G01S 13/931** (2020.01)
**G08G 1/16** (2006.01)

(52) Cooperative Patent Classification (CPC):
**F21S 45/00; G01S 7/481; G01S 13/86;
G01S 13/931; G08G 1/16**

(86) International application number:
**PCT/JP2022/045944**

(87) International publication number:
**WO 2023/120308 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 JP 2021206645
21.04.2022 JP 2022070373
21.09.2022 JP 2022150538**

(71) Applicant: **Stanley Electric Co. Ltd.
Tokyo 153-8636 (JP)**

(72) Inventors:
• **KANECHIKA Masayuki
Tokyo 153-8636 (JP)**
• **MIYAZAKI Harutomi
Tokyo 153-8636 (JP)**

(74) Representative: **Schmidbauer, Andreas Konrad
Wagner & Geyer Partnerschaft mbB
Patent- und Rechtsanwälte
Gewürzmühlstrasse 5
80538 München (DE)**

(54) **DETECTING MODULE, AND LAMP DEVICE AND LAMP SYSTEM PROVIDED WITH DETECTING MODULE**

(57)    A detecting module (20) includes a radar unit (21) configured to detect an obstacle by radiating radar waves and receiving reflected waves from the obstacle, a mirror (25) having a reflective surface (25A), placed in a radiation direction of the radar waves, and configured to transmit the radar waves from a back side toward the front, and an optical detection unit (23) configured to detect the obstacle by receiving light from the obstacle in front reflected by the reflective surface of the mirror. The radar unit (21), the mirror (25), and the optical detection unit (23) are placed such that a field of view of the radar unit and a field of view of the optical detection unit overlap or do not overlap with each other.

FIG.3

EP 4 431 983 A1

## Description

Technical Field

The present invention relates to a detecting module, a lamp device and a lamp system provide with the detecting module, and particularly related to a detecting module mounted on a moving object such as a vehicle, a lamp device and a lamp system provided with the detecting module.

Background Art

In recent years, in addition to acceleration sensors and GPS sensors, various sensors such as cameras, light detection and ranging (LiDAR), and millimeter wave sensors have been widely used for driving support and autonomous driving. LiDAR is a sensor that uses laser beam and can accurately detect the distance, position, and shape of an object. In addition, in recent years, LiDAR has also been used in portable devices as a compact and highly accurate three-dimensional measurement device.

Further, a millimeter wave radar device is not affected by environments such as nighttime or backlight, and bad weather such as dense fog, rain, and snowfall, and can maintain high environmental resistance performance. In addition, the distance and direction to an object, as well as the relative speed to the object, can be directly detected. Therefore, even an object at a short distance can be detected at high speed and with high accuracy.

For example, Patent Literature 1 discloses a vehicle lamp incorporating a LiDAR and a millimeter wave radar. In front of the millimeter wave radar, the vehicle lamp is provided with a light-emitting light guide body that hides the presence of the millimeter wave radar.

In addition, Patent Literature 2 discloses a vehicle lamp incorporating a LiDAR and a millimeter wave radar. The vehicle lamp is provided with a half mirror placed to cover the LiDAR to reduce visibility from the outside, and a half mirror placed to cover the millimeter wave radar to reduce visibility from the outside.

Patent Literature 3 discloses a lamp device that includes a shielding member made of foamed resin and covering at least a portion of the front surface of a radar unit. Patent Literature 4 discloses a vehicle system including a main body component formed of microcellular foam, a radar device placed at the rear of the main body component and configured to transmit and receive radar waves through the inside thereof.

Patent Literature 5 discloses a metal coating film that is an aggregate of fine islands and has metallic luster and can transmit electromagnetic waves. In addition,

Patent Literature 6 discloses an indium oxide-containing layer provided continuously on the surface of a base, and an electromagnetic wave-transmitting metallic luster member in which a metal layer including a plurality of portions that are discontinuous with each other at least in part are stacked on the indium oxide-containing layer.

In addition, Patent Literature 7 discloses a detection range adjusting means for determining the phase of the turning direction of rear wheels relative to front wheels, that increases the detection range on the inside of the turning direction when the phases are the same, and increases the detection range on the outside of the turning direction when the phases are opposite. Patent Literature 8 discloses a vehicle obstacle detection device that includes a detection range variable means for changing the obstacle detection range of a detector in response to a steering operation of a vehicle.

Citation List

Patent Literatures

Patent Literature 1: Japanese Patent Application Laid-Open No. 2020-104799
Patent Literature 2: International Publication No. WO 2019/021693A1
Patent Literature 3: International Publication No. WO 2021/125044A1
Patent Literature 4: PCT Japanese Translation Patent Publication No. 2021-509467
Patent Literature 5: Japanese Patent No. 5465030
Patent Literature 6: Japanese Patent No. 6400062
Patent Literature 7: Japanese Utility Model Application Publication No. S63-099285
Patent Literature 8: Japanese Utility Model Application Publication No. S61-32979

Summary of Invention

Technical Problem

Although LiDAR can detect the position and shape of an obstacle with high accuracy, LiDAR has the disadvantage that the detection capability decreases during bad weather. The inventors of the present invention has developed the present invention for the purpose of realizing an obstacle detecting module and a lamp device that can complement the detection capability of LiDAR with a radar device having high environmental resistance performance and maintain high detection capability regardless of the environment.

The present invention has been made in view of the above points, and an object of the present invention is to provide an obstacle detecting module that can maintain high environmental resistance performance without being affected by environments such as nighttime or backlight, and bad weather such as dense fog, rain, and snowfall, and a lamp device provided with the detecting module.

In addition, an object of the present invention is to provide a lamp system that can, even in a steering operation accompanying a right or left turn or the like, complement the detection capability of the radar device and detect the distance to an obstacle in the steering direction and the shape of the obstacle, accurately and quickly without waiting for turning operations.

Solution to Problem

A detecting module according to an embodiment of the present invention includes: a radar unit configured to detect an obstacle by radiating radar waves and receiving reflected waves from the obstacle; a mirror having a reflective surface, placed in a radiation direction of the radar waves, and configured to transmit the radar waves from a back side toward the front; and an optical detection unit configured to detect the obstacle by receiving light from the obstacle in front reflected by the reflective surface of the mirror, in which the radar unit, the mirror, and the optical detection unit are placed such that a field of view of the radar unit and a field of view of the optical detection unit overlap each other.

A lamp device according to another embodiment of the present invention includes the detecting module, a lamp unit, and a lamp case that houses the detecting module and the lamp unit.

Brief Description of Drawings

FIG. 1 is a perspective view showing the left front part of an automobile vehicle to which a lamp device having an obstacle detecting module according to a first embodiment of the present invention is attached.
FIG. 2 is a perspective view showing the main parts of a lamp device 10.
FIG. 3 is a perspective view schematically showing the configuration of an obstacle detecting module 20.
FIG. 4A is a view showing the placement relationship of a radar unit 21, a LiDAR unit 23, and a mirror 25 in a cross section along a vertical plane, and the detailed configuration of each.
FIG. 4B is a view schematically showing the radiation range of radar waves and laser beam when the obstacle detecting module 20 is viewed from above in a vertical direction.
FIG. 5 is a partially enlarged cross-sectional view showing an enlarged cross section of a part of a mirror 25.
FIG. 6 is a partially enlarged cross-sectional view showing an enlarged cross section of a part of another example of the mirror 25.
FIG. 7 is a partially enlarged cross-sectional view showing an enlarged cross section of a part W of still another example of the mirror 25.
FIG. 8 is a partially enlarged cross-sectional view showing an enlarged cross section of the part W of yet another example of the mirror 25.
FIG. 9 is a partially enlarged cross-sectional view showing an enlarged cross section of the part W of yet another example of the mirror 25.
FIG. 10 is a block view showing the configuration of a lamp system.
FIG. 11 is a flowchart showing the flow of detection control of the lamp system.
FIG. 12 is a view schematically showing the detection area of each LiDAR unit of a left lamp device and a right lamp device.

Description of Embodiments

Hereinafter, preferred embodiments of the present invention will be described, but these embodiments may be appropriately modified and combined. In addition, in the following description and the accompanying drawings, substantially the same or equivalent parts will be described with the same reference numerals.

[First Embodiment]

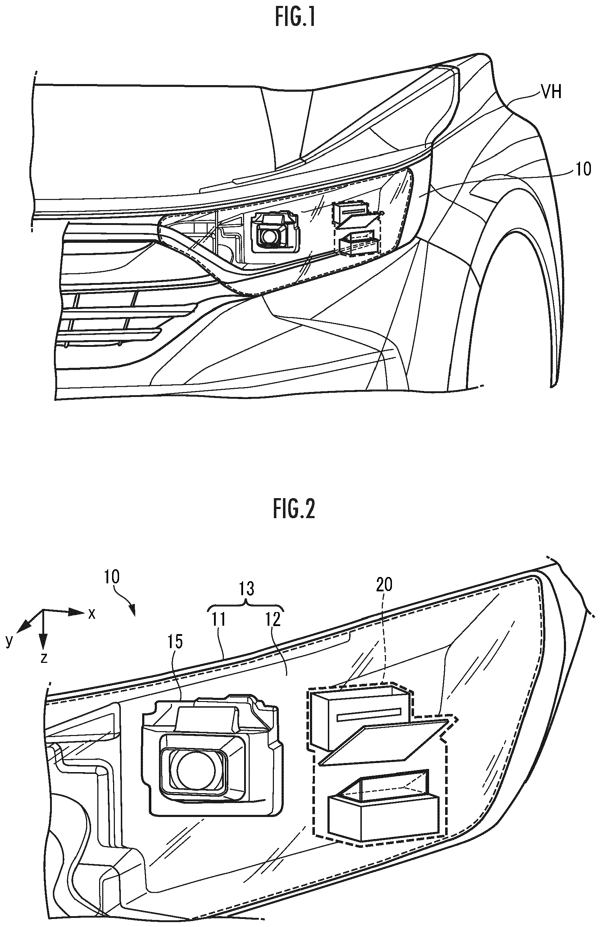

FIG. 1 is a perspective view showing the left front part of an automobile vehicle VH to which the obstacle detecting module 20 according to a first embodiment of the present invention and a lamp device 10 provided with the obstacle detecting module 20 are attached. Further, FIG. 2 is a perspective view showing the main parts of the lamp device 10.

The figure shows a three-axis coordinate system in which the traveling direction of the vehicle VH to which the lamp device 10 is attached is a y direction, the left direction is an x direction, and the downward direction (direction of gravity) is a z direction. That is, when the vehicle VH is placed horizontally, the horizontal plane is an xy plane, and the direction of gravity is the z direction.

The lamp device 10 according to the present embodiment is a vehicle lamp, and is used as headlamps disposed on the left and right sides of the front of the vehicle. Since the basic configuration of the left and right headlamps is the same, only one lamp device 10 (left headlamp) disposed on the front left side of the vehicle will be illustrated and described below.

In addition, although a case will be described in which the lamp device 10 is a headlamp for main driving, the lamp device 10 may also be a lamp device having the purpose and function of emitting light toward the outside, such as a tail lamp or a backlight.

In this specification, an automobile will be used as an example of a vehicle, but the present invention is not limited thereto. That is, in this specification, a vehicle means, for example, a vehicle such as a ship or an aircraft, and manned and unmanned transportation or movement means.

As shown in FIG. 1, the lamp device 10 is attached to the vehicle VH, but the lamp devices 10 as a left headlamp and a right headlamp are configured to be bilaterally symmetrical to each other.

As shown in FIG. 2, the lamp device 10 includes a lamp case 13 consisting of a housing 11 that is the base of the lamp device 10, and a transparent cover 12 (also called outer lens or outer cover) that is attached to the housing 11 and covers the front opening thereof.

The lamp device 10 includes a lamp unit 15 housed in a lamp chamber (lamp body space) defined by the lamp case 13, and the obstacle detecting module 20.

The lamp unit 15 includes a light source such as an LED and an optical component (not shown) such as a lens, and radiates light from the light source toward the front of the vehicle.

The obstacle detecting module 20 is placed on the side of the lamp unit 15 within the lamp device 10. However, the placement of the obstacle detecting module 20 is not limited thereto, and the obstacle detecting module 20 can be placed at any suitable position within the lamp device 10.

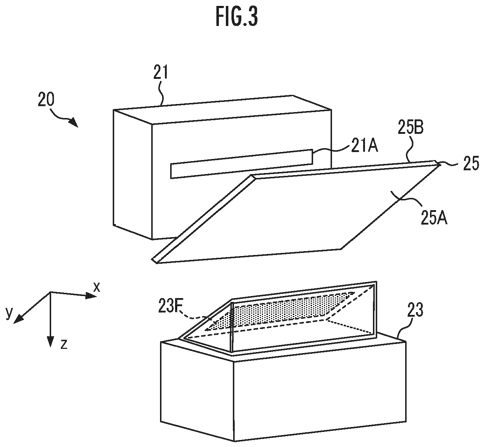

FIG. 3 is a perspective view schematically showing the configuration of the obstacle detecting module 20 according to the first embodiment of the present invention. The obstacle detecting module 20 includes the radar unit 21, the LiDAR unit 23, and the mirror 25. The radar unit 21, the LiDAR unit 23, and the mirror 25 are aligned and placed so that the respective central axes thereof are included in one vertical plane.

The radar unit 21 includes an antenna 21A that is a radar transmitter/receiver that transmits electromagnetic waves (radar waves) and receives reflected waves reflected by an obstacle. The LiDAR unit 23 includes a LiDAR radar transmitter/receiver 23A that transmits a scanned laser beam LB and receives reflected light reflected by an obstacle.

The mirror 25 has a reflective surface 25A on the surface thereof that reflects the laser beam LB from the LiDAR unit 23. Further, the mirror 25 is configured to transmit a radar wave RW from the radar unit 21 that is incident from a back surface 25B side.

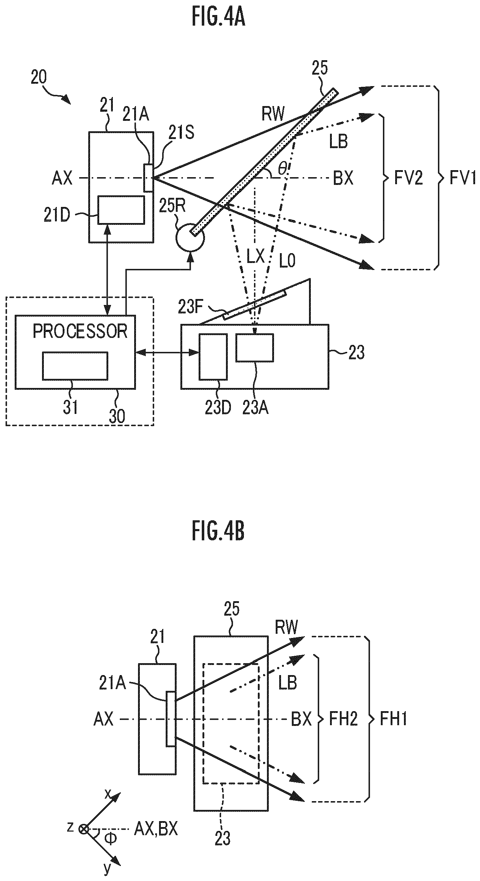

FIG. 4A is a schematic cross-sectional view along the vertical plane (that is, a plane perpendicular to the horizontal plane), and is a view showing the placement relationship of the radar unit 21, the LiDAR unit 23, and the mirror 25, and the detailed configuration of each.

Further, FIG. 4B is a view schematically showing radiation ranges of radar waves and laser beam when the radar unit 21, LiDAR unit 23, and mirror 25 are viewed from above in the vertical direction. For clarity of illustration, detailed components are omitted from illustration.

The radar unit 21 includes a radar driver 21D (first driver) which is a driving unit that drives the antenna 21A to transmit and receive radar waves. The radar driver 21D generates and outputs a detection signal (first detection signal) corresponding to the reflected waves.

In the radar unit 21, for example, millimeter waves in a 76 to 81 GHz band, particularly millimeter waves in a 76 to 77 GHz band or 79 GHz band, are preferably used as the radiated electromagnetic waves in terms of resolution and accuracy. However, the frequency band is not limited to the above frequency bands, and other frequency bands, for example, quasi-millimeter waves in a 24 GHz band and the like may be used.

The LiDAR unit 23 includes a LiDAR driver 23D (second driver) which is a driver that drives the LiDAR radar transmitter/receiver 23A to transmit and receive laser beam. The LiDAR driver 23D generates and outputs a detection signal (second detection signal) corresponding to the reflected light.

As the scanning light of the LiDAR unit 23, for example, an infrared laser beam of 905 nm is used. Further, on the optical path between the LiDAR unit 23 and the mirror 25, an optical filter 23F is provided that cuts visible light and transmits the infrared light. The wavelength of the scanning light is not limited thereto.

The mirror 25 has a configuration in which a reflective film is deposited on a substrate that can transmit radar waves, and can transmit radar waves that are incident from the back surface 25B side. As the reflective film, a material that can transmit radar waves and has metallic luster, such as indium (In) or nickel (Ni), can be used. Alternatively, a dielectric multilayer film may be used.

The mirror 25 includes a rotation/tilt controller 25R that can rotate the mirror 25 or adjust the tilt angle thereof. The rotation/tilt controller 25R includes, for example, a servo motor and a supporter (not shown). As required, the mirror 25 may be adjusted, for example, so as to face the traveling direction or side direction of the vehicle, and may be controlled so that the LiDAR unit 23 can monitor the traveling direction or side direction of the vehicle.

As shown in FIGS. 3, 4A, and 4B, the antenna 21A (radar transmitter/receiver) of the radar unit 21 is placed such that the normal direction of a radar wave radiation surface 21S (antenna surface) is within the horizontal plane.

In the present embodiment, the radar wave RW is radiated with the normal axis in the horizontal plane as a central axis AX. The radar wave RW radiated from the antenna 21A is transmitted through the mirror 25 and radiated to the outside.

The LiDAR radar transmitter/receiver 23A of the LiDAR unit 23 scans the laser beam with respect to a central axis LX, and the scanning laser beam is incident on the mirror 25. The central axis LX of laser beam scanning is placed in the vertical plane (that is, a plane perpendicular to the horizontal plane) that includes the central axis AX of the radiation range of the antenna 21A. That is, the central axis AX of the radiation range of the antenna 21A and the central axis LX of optical scanning of the LiDAR radar transmitter/receiver 23A are in the same plane (that is, in the vertical plane).

The mirror 25 is placed in front of the antenna 21A of the radar unit 21 (that is, in the radar wave detection direction). The radar wave RW radiated from the antenna 21A is transmitted from the back surface 25B side of the mirror 25 toward the front.

The mirror 25 has a flat rectangular shape, is inclined at an angle θ (θ = 45°) with respect to the central axis AX of the radiation range of the antenna 21A, and is placed perpendicularly to the same plane (that is, the vertical plane) that includes the central axis AX of the radiation range of the antenna 21A and the central axis LX of optical scanning of the LiDAR radar transmitter/receiver 23A. The angle θ depends on the placement and angle of the LiDAR unit 23, but can be approximately 30° to 60°.

In the present embodiment, the central axis AX of the radiation range of the antenna 21A and the central axis LX of optical scanning of the LiDAR radar transmitter/receiver 23A coincide at the same point on the reflective surface 25A of the mirror 25. Therefore, the laser beam radiated along the central axis LX of optical scanning of the LiDAR radar transmitter/receiver 23A is reflected along the central axis AX of the radiation range of the antenna 21A. That is, the central axis BX of optical scanning of the laser beam LB reflected by the mirror 25 (that is, the optical axis of the optical path) is configured to be coaxial with the central axis AX of the radiation range of the radar wave RW.

In addition, as shown in FIG. 4B, a vertical plane in which the central axis AX of the radiated radar wave RW and the central axis BX of the scanning laser beam LB exist (that is, the center plane of the obstacle detecting module 20) is placed at an angle φ with respect to the traveling direction of the vehicle VH (y direction). The angle φ can be selected as appropriate depending on the usage of the obstacle detecting module 20. For example, in front detection, φ = 0°, in front and side detection, φ = 45° or φ = 30 to 60°, etc., but the angle is not limited thereto. The angle φ may be made variable by the rotation/tilt controller 25R.

As shown in FIG. 4A, the radar unit 21, the LiDAR unit 23, and the mirror 25 are connected to a processor 30 that controls the obstacle detecting module 20 and processes information. Further, the processor 30 includes a field-of-view adjuster 31 that can control the radar driver 21D and the LiDAR driver 23D to individually adjust the field of views (FOV) of the radar unit 21 and the LiDAR unit 23.

The processor 30 does not need to be provided within the lamp device 10. For example, the processor 30 may be attached to the vehicle VH, and may be included in, for example, an electronic controller (ECU) and the like.

The signal received by the radar unit 21 and the LiDAR unit 23 is subjected to signal processing by a control device such as an ECU, and the distance, the angle, the velocity, and the shape between the vehicle and the object are detected, and obstacle detection is performed. The radar unit 21 and the LiDAR unit 23 are used, for example, as an obstacle detecting module of an advanced emergency braking system (AEBS) and an adaptive cruise control (ACC) device. Alternatively, the radar unit 21 and the LiDAR unit 23 can also be used as a rear obstacle detecting module and a pedestrian detecting module.

[Fields of View of Radar Unit 21 and LiDAR Unit]

As shown in FIG. 4A, the radar wave RW radiated from the antenna 21A of the radar unit 21 is transmitted through the mirror 25 and is radiated to the outside, and the radar unit 21 has a field of view FV1 in the vertical plane (±z direction).

In addition, the laser beam LB radiated from the LiDAR radar transmitter/receiver 23A of the LiDAR unit 23 is reflected by the mirror 25 and radiated to the outside, and the LiDAR unit 23 has a field of view FV2 in the vertical plane (±z direction).

In addition, as shown in FIG. 4B, the radar unit 21 has a field-of-view FH1 in the horizontal plane (in a plane perpendicular to the z direction). Further, the LiDAR unit 23 has a field of view FH2 in the horizontal plane (in a plane perpendicular to the z direction).

In the present embodiment, the field of view FV1 of the radar unit 21 and the field of view FV2 of the LiDAR unit 23 in the vertical plane are symmetrical with respect to the central axis AX of the radiation range of the antenna 21A.

The radiation range of the radar unit 21 is equivalent to the radar detection range expressed as the field of view (FOV) of the radar. The radar radiation range is determined as the range that specifically requires detection. For example, the radar for detecting the surroundings of the vehicle in the present embodiment has a field of view of approximately ±75° (FH1 = ±75°) in the left-right direction (horizontal direction) and ±20° (FV1 = ±20°)in the upper-lower direction (vertical direction) with respect to the normal direction of the radar wave radiation surface 21S (antenna surface) of the radar unit 21.

In addition, similar to the radar unit 21, the optical scanning range of the LiDAR unit 23 is equivalent to the detection range expressed as the field of view (FOV) of LiDAR. For example, in the present embodiment, the field of view FH2 of the LiDAR unit 23 in the horizontal direction is ±30°, and the field of view FV2 in the vertical direction is ±15°.

That is, the radar wave RW radiated from the radar unit 21 is transmitted through the mirror 25 and is radiated to the outside, and the laser beam LB radiated from the LiDAR unit 23 is reflected by the mirror 25 and radiated to the outside. The field of view of the radar unit 21 is configured to include the field of view of the LiDAR unit 23.

Therefore, the detection capability of the LiDAR unit 23 can be complemented by the radar unit 21 over the entire field of view of the LiDAR unit 23.

In addition, since the central axis AX of the radiation range of the radar wave RW of the radar unit 21 is configured to be coaxial with the central axis BX of optical scanning of the LiDAR unit 23, the data received by the radar unit 21 can be used for controlling the LiDAR unit 23 and processing information without requiring data conversion such as coordinate conversion. Therefore, it is possible to realize a highly accurate obstacle detecting module that is capable of high-speed processing.

The present invention is not limited to the case where the radar unit 21 has a field of view that includes the field of view of the LiDAR unit 23. It is sufficient that the field of view of the radar unit 21 and the field of view of the LiDAR unit 23 overlap with each other. When the fields of view of the radar unit 21 and the LiDAR unit 23 are shared, the radar unit 21 can complement the detection capability of the LiDAR unit 23 in the field of view.

That is, with the obstacle detecting module 20 according to the present application, since the respective fields of view of the radar unit 21 and the LiDAR unit 23 are formed by using the radar wave RW transmitted through the mirror 25 and the laser beam reflected by the mirror 25, an obstacle detecting module with a wide shared field of view, where the fields of view overlap each other or the field of view of the radar unit 21 includes the field of view of the LiDAR unit 23, can be realized in a compact size. Further, an obstacle detecting module can be easily incorporated into a lamp device, and the lamp device provided with the obstacle detecting module can be realized without expanding the lamp device.

With the obstacle detecting module 20 having the above-described configuration, since the detection capability of the LiDAR unit 23 can be complemented by the radar unit 21 having high environmental resistance performance, it is possible to maintain high detection capability even in a bad environment.

In addition, the field of view of the radar unit 21 does not have to include the field of view of the LiDAR unit 23. In this case, the field-of-view adjuster 31 can adjust the field of view of the LiDAR unit 23 to complement the field of view of the radar unit 21.

That is, with the obstacle detecting module 20 according to the present application, since the respective fields of view of the radar unit 21 and the LiDAR unit 23 are formed by using the radar wave RW transmitted through the mirror 25 and the laser beam reflected by the mirror 25, it is possible to realize an obstacle detecting module having a wide field of view in a compact size, in which the fields of view do not overlap with each other, or the field of view of the radar unit 21 does not include the field of view of the LiDAR unit 23. In addition, the obstacle detecting module 20 can be easily incorporated into a lamp device, and the lamp device provided with the obstacle detecting module can be realized without expanding the lamp device.

Further, the field of view of the LiDAR unit 23 may be adjusted by moving the mirror 25 by the rotation/tilt controller 25R. As a result, for example, a case in which the field of view of the radar unit 21 and the field of view of the LiDAR unit 23 are shared and the detection capability of the LiDAR unit 23 is complemented by the radar unit 21, and a case in which a range outside the field of view of the radar unit 21 is detected by the LiDAR unit 23 and the range that cannot be detected by the radar unit 21 is complemented can be used depending on the situation inside and outside the vehicle.

In the present embodiment, although the case has been described in which the central axis AX of the radiated radar wave RW and the central axis BX of the scanning laser beam LB are in the same vertical plane, the present invention is not limited thereto, and the central axis AX of the radiated radar wave RW and the central axis BX of the scanning laser beam LB may be in any plane.

For example, in the present embodiment, although an example has been described in which the LiDAR unit 23 is placed below the radar unit 21 in the vertical direction (z direction), the LiDAR unit 23 may be placed above the radar unit 21 in the vertical direction (-z direction).

Alternatively, the LiDAR unit 23 may be placed on the side (left-right direction) of the radar unit 21, and the central axis AX of the radiated radar wave RW and the central axis BX of the scanning laser beam LB may be placed in the same horizontal plane. Further, the plane on which the central axis AX of the radiated radar wave RW and the central axis BX of the scanning laser beam LB exist may be a plane having an arbitrary angle with respect to the horizontal plane or the vertical plane.

In addition, instead of the LiDAR unit 23, which is an active device, a camera or the like can be used as a passive optical detection unit.

In this case, the camera detects image data within the field of view (FOV) reflected on the mirror 25. The field of view of the radar unit 21 and the field of view of the camera (optical detection unit) are configured to overlap with each other.

Further, it is preferable that the field of view of the radar unit 21 has a field of view that includes the field of view of the camera. Alternatively, it is preferable that the central axis of the radiation range of the radar unit 21 and the optical axis of the optical path of the camera are coaxial.

The fields of view (FOV) of the radar unit 21 and the LiDAR unit 23 can be respectively set within the range inside the radiation range of the radar wave RW and the range inside the light scanning range, that are ranges smaller than the radiation range of radar wave RW and the scanning range of light, or the fields of view can be expanded (so-called variable FOV). Alternatively, the range may be asymmetrical with respect to the central axes AX and BX of the radar unit 21 and the LiDAR unit 23, respectively.

When the field of view (FOV) is in an asymmetric range, for the radar unit 21, for example, in the vertical direction, the field of view can range from +15° to -20° vertically with the central axis AX as a reference axis. Similarly, in the horizontal direction, the field of view can be in an asymmetrical range from left to right with the central axis AX as a reference axis. Further, the same applies to the field of view of the LiDAR unit 23.

Such reduction and expansion of the field of view (FOV) or asymmetrical field of view (variable FOV) may be made, for example, as a default change setting of the radar unit 21. Alternatively, the field of view may be changed and set by adjustment performed by the radar driver 21D or the field-of-view adjuster 31, or by information processing by the processor 30. Further, the same applies to the field of view (FOV) of the LiDAR radar transmitter/receiver 23A.

[Configuration of Mirror 25]

(1) Shape of Mirror 25

In the above-described embodiment, although the case in which the mirror 25 has a flat rectangular shape has been described, the present invention is not limited thereto.

The mirror 25 may have a concave or convex shape. When it is desired to make the field of view uniform with respect to the central axis of the concave or convex mirror 25, it is preferable that the shape is rotationally symmetrical with respect to the central axis or symmetrical with respect to a plane containing the central axis. When the field of view is not made uniform, the shape may be asymmetrical with respect to the central axis. Further, by forming a free-form surface including a concave or convex shape, the field of view can be flexibly set. The acquired data based on the concave or convex shape may contain a certain error, which can be corrected by calculations within the processor 30.

In addition, it is preferable that the mirror 25 is placed such that the center thereof is located on the central axis AX of the radar unit 21.

In addition, it is preferable that the mirror 25 is placed such that the central axis LX of optical scanning of the LiDAR unit 23 or the optical axis of the optical detection unit passes through the focal point of the mirror 25.

(2) Radar Wave Transmission Structure of Mirror 25

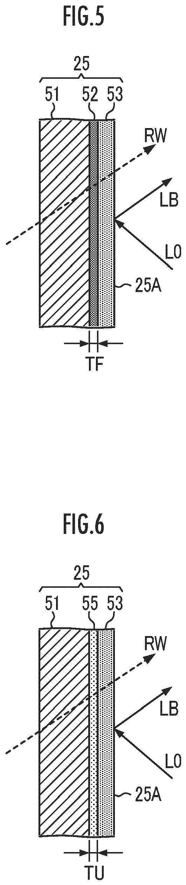

FIG. 5 is a partially enlarged cross-sectional view showing an enlarged cross section of a part of a mirror 25. The mirror 25 includes a foamed resin body 51, a flat resin layer 52 formed on the foamed resin body 51, and an island-shaped metal layer 53 formed on the flat resin layer 52.

The foamed resin of the foamed resin body 51 is formed by enclosing carbon dioxide gas or the like in a resin such as polycarbonate, acrylic, polyimide, or epoxy, and creating air bubbles in the resin. Since gas is sealed in the resin, the dielectric constant is lowered, making it possible to greatly reduce the influence on electromagnetic waves. Therefore, the electromagnetic wave transmission characteristics of the foamed resin body 51 are good. When the expansion ratio of the foamed resin is 2 times or more, the influence of the resin can be almost ignored.

The surface of the foamed resin body 51 is flattened by the flat resin layer 52. Since the surface of the foamed resin is uneven, light is scattered and it is difficult to perform light distribution. It is possible to form the flat resin layer 52 having a flat surface by spraying a highly viscous epoxy resin or the like onto the surface of the foamed resin body 51 in the manner of a coating process.

As another method, the flat resin layer 52 may be formed not only during the coating process but also when forming the foamed resin body 51 by using a mold, by increasing the temperature of the mold to melt the surface of the foamed resin body at the contact surface between the mold and the foamed resin, thereby forming a flat surface.

In addition, it is possible to flatten the surface of the foamed resin body 51 by using a welded stacked film made of, for example, PET+PP (PET: polyethylene terephthalate, PP: polypropylene), in which resins with different melting points are stacked, and by welding the resin with a low melting point to the foamed resin.

The epoxy resin is highly viscous, and does not penetrate deep into the foamed resin. In addition, for example, with the welded stacked film made of PET+PP, it is possible to prevent the welded resin layer having a low melting point from penetrating deep into the foamed resin by controlling the thickness of the welded resin layer.

It is possible to produce a surface on which the island-shaped metal layer 53 can be formed without deteriorating the electromagnetic wave transmission characteristics of the foamed resin by setting the thickness (TF) of the flat resin layer 52, that is, the epoxy resin or a stacked body of resins with different melting points, to 1/20 or less of an effective wavelength $\lambda$d of the radar wave RW in the resin (TF $\leq$ $\lambda$d/20).

The island-shaped metal layer 53 is formed on the flat resin layer 52. The island-shaped metal layer 53 is a metal coating film that is an aggregate of fine islands and has metallic luster and can transmit electromagnetic waves.

Here, the island-shaped metal layer 53 has an island-shaped structure in which the metal layer is partitioned by fine cracks. The island-shaped metal layer 53 can reflect light L0 from the LiDAR unit 23 with a sufficient reflectance. Therefore, the mirror 25 fully exhibits a function as a mirror.

As the metal of the island-shaped metal layer 53, for example, indium, palladium, aluminum, nickel, nickel alloy, copper, copper alloy, silver, silver alloy, tin, tin alloy, or the like can be used, but the present invention is not limited thereto. The island-shaped metal layer 53 can be formed by electroless plating of these metals and the like.

As shown in FIG. 5, with the mirror 25 having such a configuration, the light L0 from the LiDAR unit 23 is reflected with a sufficient reflectance, and reflected light LB can be obtained, and the attenuation of the radar wave RW from the radar unit 21 is suppressed.

Therefore, even if the radar unit 21 is placed behind the mirror 25 and the radar wave RW is incident on the mirror 25 from the back surface 25B of the mirror 25, the obstacle detection function of the radar unit 21 is fully exhibited.

That is, even if the radar unit 21 is placed at a position where the mirror 25 and the radiated electromagnetic waves (radar waves) overlap, it is possible to provide an obstacle detecting module 20 that can suppress attenuation and reflection of radiated electromagnetic waves, does not change the electromagnetic wave radiation pattern, and has sufficiently reduced loss of radar function.

In addition, the degree of freedom in placing the radar unit 21 is increased, and it is possible to apply the radar unit 21 to obstacle detection for various purposes. Further, since the radar unit 21 is placed on the back side of the mirror 25, it is difficult to see from the outside, and the radar unit 21 can be hidden, which is convenient from a design point of view.

FIG. 6 is a partially enlarged cross-sectional view showing an enlarged cross section of the part W of another example of the mirror 25. The mirror 25 includes the foamed resin body 51, the base layer 55 formed on the foamed resin body 51, and an island-shaped metal layer 53 formed on the base layer 55.

The base layer 55 is made of indium tin oxide (ITO). The base layer 55 can be formed on the foamed resin body 51 by sputtering, vapor deposition, or the like. The base layer 55 is not limited to indium tin oxide (ITO), and metal oxides such as indium oxide and indium zinc oxide (IZO) can be used.

It is possible to produce a surface on which the island-shaped metal layer 53 can be formed without deteriorating the electromagnetic wave transmission characteristics of the foamed resin by setting the thickness (TU) of the base layer 55 to 1/20 or less of the effective wavelength $\lambda u$ of the radar wave RW in the base layer 55 (TU $\leq \lambda u/20$).

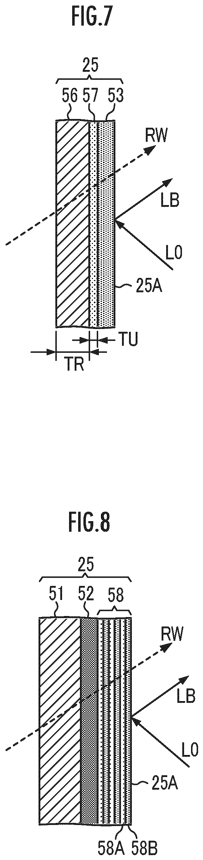

FIG. 7 is a partially enlarged cross-sectional view showing an enlarged cross section of the part W of still another example of the mirror 25. The mirror 25 includes a flat resin substrate 56, a base layer 57 formed on the resin substrate 56, and the island-shaped metal layer 53 formed on the base layer 57. The base layer 57 is similar to the base layer 55 described above, and metal oxide or the like can be used.

The resin substrate 56 is made of non-foaming resin and has a thickness TR. When the effective wavelength of the radar wave RW in the resin body 56 is $\lambda r$, and the thickness TR satisfies the following relationship, the reflected loss occurring at the interface between the resin body 56 and space and the interface between the resin substrate 56 and the base layer 57 can be reduced.

$$TR = m \times \lambda r/2 \text{ (m is a natural number)}$$

Even if the thickness TR of the resin substrate 56 does not necessarily completely match the above relational expression, the reflection loss can be suppressed very effectively by setting a frequency f of the radar wave RW to fall within a frequency band where the reflected power loss is -10 dB or less (reflected power is 10% or less).

FIG. 8 is a partially enlarged cross-sectional view showing an enlarged cross section of the part W of still another example of the mirror 25. The mirror 25 includes the foamed resin body 51, the flat resin layer 52 formed on the foamed resin body 51, and a dielectric multilayer film 58 formed on the flat resin layer 52.

The dielectric multilayer film 58 has a structure in which films 58A made of a material having a high dielectric constant, and films 58B made of a material having a lower dielectric constant than the film 58A, are alternately stacked in two or more layers. As the material of the high dielectric constant film 58A, for example, TazOs, $TiO_2$, or the like can be used, and as the material of the low dielectric constant film 58B, for example, $SiO_2$, $MgF_2$, or the like can be used. By setting the optical film thickness (refractive index x film thickness) of each of the high dielectric constant film 58A and the low dielectric constant film 58B to 1/4 of the wavelength of the light to be reflected (infrared light or visible light, that is, the wavelengths that a LiDAR unit or optical detection unit can emit or detect), it is possible for the dielectric multilayer film 58 to transmit the radar wave RW while serving as a reflective film for these wavelengths of light.

It is preferable that the film thickness of the entire dielectric multilayer film 58 is 1/20 of the effective wavelength of the radar wave RW. Specifically, if the dielectric constant of the high dielectric constant film 58A is $\varepsilon$ and the wavelength of the radar wave RW is $\lambda$, the effective wavelength is calculated as $\lambda/\varepsilon^{1/2}$. That is, by making the entire film thickness of the dielectric multilayer film 58 smaller than $\lambda/(20\varepsilon^{1/2})$, the influence on the transmission loss of the radar wave RW can be suppressed and the detection sensitivity of the radar unit 21 can be maintained.

The dielectric multilayer film 58 may have an island-shaped structure in which the dielectric multilayer film 58 is partitioned by including fine cracks. Such a structure can be formed by applying a thermal shock to the mirror 25. Specifically, cracks occur due to thermal shock because of the difference in thermal shrinkage rate between the foamed resin body 51, the flat resin layer 52, the high dielectric constant film 58A, and the low dielectric constant film 58B. Since the width of the crack generated here is fine, the cracks do not affect the function of the LiDAR unit or the optical detection unit.

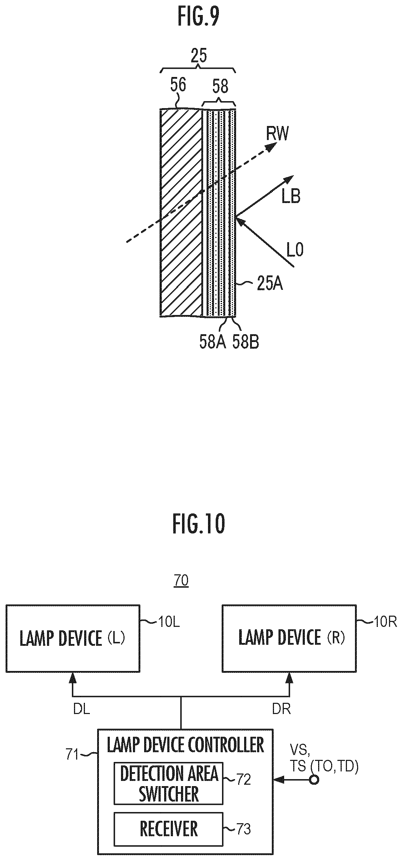

FIG. 9 is a partially enlarged cross-sectional view showing an enlarged cross section of the part W of still another example of the mirror 25. The mirror 25 includes the resin substrate 56 and the dielectric multilayer film 58 formed thereon. Since the resin substrate 56 is the same as in the case of FIG. 7, and the dielectric multilayer film 58 is the same as in the case of FIG. 8, a description thereof will be omitted.

Even in the case described with reference to FIGS. 6 to 9, the radar unit 21 is placed behind the mirror 25, and even if the radar wave RW is incident on the mirror 25 from the back surface of the mirror 25, the obstacle detecting function of the radar unit 21 is fully exhibited.

[Lamp system]

Detection control of a lamp system 70 will be described in detail below, taking as an example an automobile (hereinafter, referred to as vehicle VH) that has a pair of lamp devices 10, which are headlamps, on the left and right sides and is provided with an obstacle detecting module 20.

More specifically, the vehicle VH is provided with the lamp devices 10 as a left headlamp and a right headlamp, respectively. In the following description, these lamp devices 10 will be referred to as a left lamp device 10L and a right lamp device 10R, respectively.

In the above description, the lamp device 10 (that is, the left lamp device 10L), which is the left headlamp, is described as an example, but as described above, the left lamp device 10L and the right lamp device 10R are configured such that each component of the devices is placed bilaterally symmetrical when attached to the vehicle VH. When these lamp devices are not particularly distinguished, the lamp devices are collectively referred to as the lamp device 10.

In addition, the left lamp device 10L and the right lamp device 10R are each provided with the obstacle detecting module 20. In the following description, these obstacle detecting modules 20 will not be particularly distinguished and will be referred to as the detecting module 20 of the left lamp device 10L and the detecting module 20 of the right lamp device 10R. Further, the same applies to each component of the left lamp device 10L and the right lamp device 10R, that is, the detecting module 20, the lamp case 13, and the like.

The lamp units 15 of the left lamp device 10L and the right lamp device 10R may have different light distributions as left and right lamps, respectively, or the like. In addition, the respective obstacle detecting modules 20 of the left lamp device 10L and the right lamp device 10R may also have different placement angles and the like as left and right detecting modules, respectively.

FIG. 10 is a block view showing the configuration of the lamp system 70. The lamp system 70 includes a lamp device controller 71. In addition, the lamp device controller 71 includes a receiver 72 and a detection area switcher 73.

The receiver 72 receives a vehicle speed signal VS indicating the driving speed of the vehicle VH from a vehicle control device such as an ECU mounted on the vehicle VH. In addition, the receiver 72 receives a direction indication signal TS from the vehicle control device.

The direction indication signal TS includes an on signal TO indicating the activation state (on state) of a direction indicator (not shown) of the vehicle VH, and a direction signal TD indicating the right or left turn direction (R/L) of the direction indicator.

The detection area switcher 73 generates switching control signals DL and DR based on the vehicle speed signal VS and the direction indication signal TS (on signal TO and direction signal TD) received by the receiver 72 and sends the switching control signals DL and DR to the left lamp device 10L and the right lamp device 10R, respectively, to switch the detection area of each lamp device.

More specifically, the detection area switcher 73 controls each of the rotation/tilt controllers 25R of the left lamp device 10L and the right lamp device 10R by using the switching control signals DL and DR, adjusts the orientation of the mirror 25, switches the detection area of the LiDAR unit 23, which is an optical detection unit, and fixes the detection area.

The detection area can be switched by rotating the mirror 25 in the left-right direction (inward in the horizontal plane) (that is, the axis of rotation is in the z direction), but the present invention is not limited thereto. In addition to rotating the mirror 25, the LiDAR unit 23 itself may also be rotated. Alternatively, the elevation angle of the mirror 25 may be changed as the mirror 25 rotates. In addition, in these cases, trapezoidal correction may be performed on the data received from the LiDAR unit 23.

In addition, it is also possible to rotate the mirror 25 and mask the received data obtained until the detection area is fixed (rotation period) so that the received data is not used. Alternatively, a blank signal may be used instead of the received data during the rotation period. In this case, for example, the processor 30 can generate a blank signal. Therefore, the amount of data processed by the processor 30 is reduced, the processing load is reduced, and high-speed processing is possible.

Further, the rotation/tilt controller 25R or the mirror 25 may be provided with a damper for suppressing mirror vibration due to rotational driving of the mirror 25.

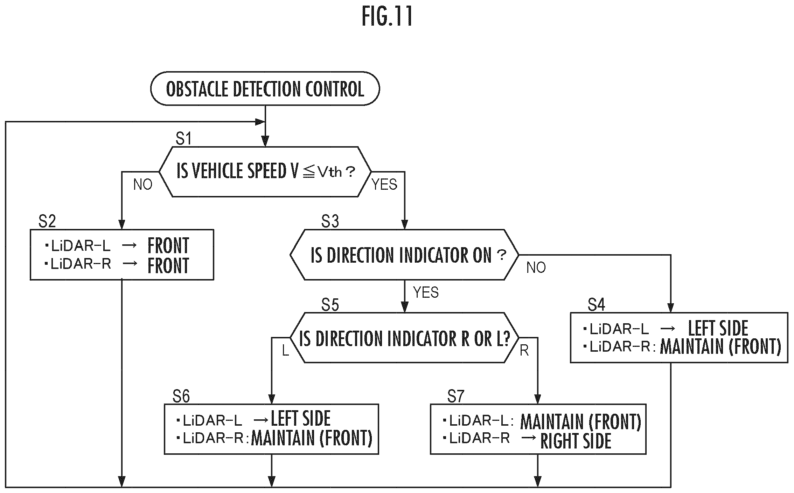

FIG. 11 is a flowchart showing the flow of detection control of the lamp system 70. An example will be described in which the traffic division of a vehicle is to keep to the left, but when the traffic division of the vehicle is to keep to the right, the left and right may be swapped in the following.

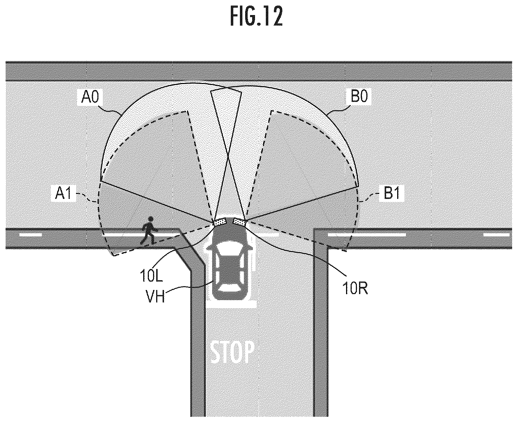

In addition, FIG. 12 is a view schematically showing the detection area of each LiDAR unit 23 of the left lamp device 10L and the right lamp device 10R during the detection control. More specifically, the LiDAR unit 23 of the left lamp device 10L has a front detection area A0 and a side detection area A1.

Here, the front detection area A0 of the left lamp device 10L is a detection area in front of the vehicle VH in the traveling direction, and the side detection area A1 is a detection area on the left side of the left lamp device 10L, that is, to the left side of the front detection area A0.

Further, similarly, the LiDAR unit 23 of the right lamp device 10R has a front detection area B0 and a side detection area B1. Here, the front detection area B0 of the right lamp device 10R is a detection area in front of the vehicle VH in the traveling direction, and the side detection area B1 is a detection area on the right side of the right lamp device 10R.

Detection control executed by the lamp device controller 71 will be described with reference to FIGS. 11 and 12. The detection control is executed in steps S1 to S7 below.

At the start of step S1, the vehicle VH is driving at a normal driving speed (non-creeping speed), and the detection areas of the LiDAR units 23 of the left lamp device 10L and the right lamp device 10R are both the front detection areas A0 and B0.

In step S1, the detection area switcher 73 determines, based on the vehicle speed signal VS received by the receiver 72, whether the vehicle speed signal VS is equal to or lower than a predetermined creeping speed Vth. The predetermined creeping speed Vth may be, for example, 30 km/h, but is not limited thereto and may be set as appropriate.

When the vehicle speed signal VS exceeds the creeping speed Vth (in the case of NO, that is, during normal driving), the process moves to step S2, and when the vehicle speed signal VS is equal to or lower than the creeping speed Vth (in the case of YES), the process moves to step S3.

In step S2, the detection area switcher 73 maintains the detection areas of the LiDAR unit 23 (LiDAR-L) of the left lamp device 10L and the LiDAR unit 23 (LiDAR-R) of the right lamp device 10R to the front detection area A0 and the front detection area B0, which are the detection areas during normal driving (VS > Vth), respectively, and the process returns to step S1.

In step S3, the detection area switcher 73 determines whether or not the direction indicator is in the on state based on the on signal TO of the direction indicator received by the receiver 72. When the direction indicator is not in the on state (NO, that is, off state), the process moves to step S4, and when the direction indicator is in the on state (YES), the process moves to step S5.

In step S4, since the vehicle VH is driving slowly in the traveling direction, the detection area switcher 73 switches the detection area of the LiDAR unit 23 (LiDAR-L) of the left lamp device 10L to the left side detection area A1. In addition, the detection area of the LiDAR unit 23 (LiDAR-R) of the right lamp device 10R is maintained at the front detection area B0.

In step S5, the detection area switcher 73 determines whether the direction indicated by the direction indicator is a left turn (L) or a right turn (R), based on the direction signal TD in the direction indication signal TS received by the receiver 72. When the direction is a left turn (L), the process moves to step S6, and when the direction is a right turn (R), the process moves to step S7.

In step S6, since the direction signal TD indicates a left turn (L), that is, the side corresponding to the traffic division of the vehicle (that is, left side), the detection area switcher 73 switches the detection area of the LiDAR unit 23 (LiDAR-L) of the left lamp device 10L to the left side detection area A1, which is the inner side of the turn. In addition, the detection area of the LiDAR unit 23 (LiDAR-R) of the right lamp device 10R is maintained at the front detection area B0.

In step S7, since the direction signal TD indicates a right turn (R), that is, the direction opposite to the side corresponding to the traffic division of the vehicle (right direction), the detection area switcher 73 switches the detection area of the LiDAR unit 23 (LiDAR-R) of the right lamp device 10R to the right side detection area B1, which is the inner side of the turn. In addition, the detection area of the LiDAR unit 23 (LiDAR-L) of the left lamp device 10L is maintained at the front detection area A0.

Although steps S3 and S5 have been described separately, the determinations in steps S3 and S5 can be performed simultaneously. Therefore, the switching of the detection area in steps S6 and S7 can be executed in response to or in synchronization with the direction indication signal TS of the direction indicator. In addition, step S4 may also be executed in response to or in synchronization with the direction indication signal TS (on signal TO) of the direction indicator.

In steps S4, S6, and S7, the state in which the detection area has been switched is maintained, and in this maintained state, the process moves to step S1, and the above steps are repeated.

Obstacle detection control of the lamp system 70 is executed through the above flow.

As described in detail above, with the lamp system according to the present embodiment, since the detection area of the LiDAR unit is switched in response to the activation of the direction indicator of the vehicle VH, it is possible to quickly detect an obstacle in the steering direction without waiting for a steering operation or a turning operation accompanying a right or left turn or the like. Therefore, obstacles can be detected without delay prior to steering.

In addition, it is possible to complement the detection capability of a radar device, and to detect the distance to an obstacle in the steering direction and the shape of the obstacle accurately and quickly without waiting for a turning operation.

In the embodiment described above, although the case has been described in which the obstacle detecting module 20 is provided within the lamp case 13 that defines the lamp body space, the present invention is not limited thereto. The obstacle detecting module 20 may be installed in a space (for example, a detecting module case) separated from the lamp case 13. The detecting module case may be coupled to the lamp case 13 or configured integrally with the lamp case 13.

As described in detail above, according to the present embodiment, since the detection capability of a LiDAR unit or an optical detection unit can be complemented by a radar unit with high environmental resistance performance, it is possible to provide an obstacle detecting module that can maintain high detection capability even in a bad environment, and a lamp device provided with the obstacle detecting module.

In addition, it is possible to realize an obstacle detecting module having a wide shared field of view in a compact size. Further, it is possible to provide a lamp device provided with an obstacle detecting module without expanding the lamp device.

In addition, it is possible to provide a lamp system capable of complementing the detection capability of a radar device and accurately and quickly detecting the distance to an obstacle in a steering direction and the shape of the obstacle without waiting for a turning operation even in a steering operation accompanying a right or left turn or the like.

Description of Reference Numerals

10: lamp device
11: base
12: transparent cover
13: lamp case
15: lamp unit
21: radar unit
21A: antenna
21D: radar driver
21S: radar wave radiation surface
23: LiDAR unit
23A: LiDAR radar transmitter/receiver
23D: LiDAR driver
25: mirror
25A: reflective surface
25R: rotation/tilt controller
30: processor
31: field-of-view adjuster
51: foamed resin body
53: island metal layer
58: dielectric multi-layer film
70: lamp system
71: lamp device controller
72: receiver
73: detection area switcher
FH1, FV1, FH2, FV2: field of view
LB: scanning laser beam
RW: radiated electromagnetic wave
TD: direction signal
TO: on signal
TS: direction indication signal

VS: vehicle speed signal

## Claims

1. A detecting module comprising:

   a radar unit configured to detect an obstacle by radiating radar waves and receiving reflected waves from the obstacle;
   a mirror having a reflective surface, placed in a radiation direction of the radar waves, and configured to transmit the radar waves from a back side toward the front; and
   an optical detection unit configured to detect the obstacle by receiving light from the obstacle in front reflected by the reflective surface of the mirror, wherein
   the radar unit, the mirror, and the optical detection unit are placed such that a field of view of the radar unit and a field of view of the optical detection unit overlap each other.

2. The detecting module according to claim 1, wherein the field of view of the radar unit includes the field of view of the optical detection unit.

3. The detecting module according to claim 2, wherein a central axis of a radiation range of the radar waves of the radar unit and an optical axis of the optical detection unit are in a same plane.

4. The detecting module according to claim 3, wherein the central axis of the radar unit and an optical axis in an optical path between the optical detection unit and the obstacle are coaxial with each other.

5. The detecting module according to claim 3, wherein

   the optical detection unit is a LiDAR unit that radiates scanning laser beam to the mirror to detect the obstacle by reflected laser beam from the mirror, and
   the optical axis, which is a central axis of laser beam scanning of the LiDAR unit, is in the same plane.

6. The detecting module according to claim 3, wherein the optical detection unit is a camera.

7. The detecting module according to claim 3, wherein the mirror has a flat plate shape, and the reflective surface is placed to be perpendicular to the same plane.

8. The detecting module according to claim 3, wherein the mirror is inclined by 30° to 60° with respect to the central axis of the radar unit.

9. The detecting module according to claim 3, wherein the mirror has a concave or convex surface shape that is rotationally symmetric with respect to a central axis, and is placed such that a center of the mirror is located on the central axis of the radar unit.

10. The detecting module according to claim 1, wherein the radar unit includes a radar wave radar transmitter/receiver configured to transmit and receive the radar waves, and a radar driver configured to drive the radar wave radar transmitter/receiver to determine the field of view of the radar unit.

11. The detecting module according to claim 1, wherein the optical detection unit includes an optical detection unit driver configured to drive the optical detection unit to determine the field of view of the optical detection unit.

12. The detecting module according to claim 1, wherein the optical detection unit is a LiDAR unit, and includes a laser beam radar transmitter/receiver configured to transmit and receive laser beam of the LiDAR unit and a LiDAR driver configured to drive the laser beam radar transmitter/receiver to determine the field of view of the LiDAR unit.

13. The detecting module according to any one of claims 1 to 12, wherein the mirror includes an island metal layer or a dielectric multilayer film.

14. A lamp device comprising:

    the detecting module according to any one of claims 1 to 12;
    a lamp unit; and
    a lamp case configured to house the detecting module and the lamp unit.

15. A lamp device comprising:

    the detecting module according to any one of claims 1 to 12; and
    a lamp unit housed in a lamp chamber space separated from a space in which the detecting module is mounted.

16. A detecting module comprising:

    a radar unit configured to detect an obstacle by radiating radar waves and receiving reflected waves from the obstacle;
    a mirror having a reflective surface, placed in a radiation direction of the radar waves, and configured to transmit the radar waves from a back side toward the front; and
    an optical detection unit configured to detect the obstacle by receiving light from the obstacle in front reflected by the reflective surface of the mirror, wherein
the radar unit, the mirror, and the optical detection unit are placed such that a field of view of the radar unit and a field of view of the optical detection unit do not overlap each other.

17. A detecting module comprising:

    a radar unit configured to detect an obstacle by radiating radar waves and receiving reflected waves from the obstacle;
    a mirror having a reflective surface, placed in a radiation direction of the radar waves, and configured to transmit the radar waves from a back side toward the front; and
    an optical detection unit configured to detect the obstacle by receiving light from the obstacle in front reflected by the reflective surface of the mirror.

18. The detecting module according to claim 17, further comprising:

    a rotation/tilt controller configured to adjust an orientation of the mirror.

19. A lamp system comprising:

    a pair of lamp devices which are left and right lamp devices, each of which is the lamp device according to claim 14; and
    a lamp device controller configured to control the pair of lamp devices, wherein
    each of the pair of lamp devices includes a rotation/tilt controller configured to adjust an orientation of the mirror,
    the lamp device controller includes

        a receiver configured to receive a vehicle speed signal indicating a vehicle speed and a direction indication signal indicating an activation of a direction indicator and a direction of turning right or left, and
        a detection area switcher configured to control the rotation/tilt controllers of the pair of lamp devices to adjust the orientation of the mirror and switch a detection area of the optical detection unit, and

    when the vehicle speed is equal to or lower than a predetermined speed, the detection area switcher switches the detection area of the optical detection unit of at least one of the pair of lamp devices in response to the direction indication signal.

**20.** The lamp system according to claim 19, wherein when the direction indication signal indicates a side corresponding to a traffic division of a vehicle, the detection area switcher switches the detection area of the optical detection unit of one of the lamp devices on the side corresponding to the traffic division from front detection to side detection.

**21.** The lamp system according to claim 19, wherein when the direction indication signal indicates a direction opposite to a side corresponding to a traffic division of a vehicle, the detection area switcher sets the detection area of the optical detection unit of one of the lamp devices on the side corresponding to the traffic division to front detection, and sets the detection area of the optical detection unit of the other lamp device to side detection.

**22.** A lamp system comprising:

a pair of lamp devices which are left and right lamp devices, each of which is the lamp device according to claim 14; and
a lamp device controller configured to control the pair of lamp devices, wherein
each of the pair of lamp devices includes a rotation/tilt controller configured to adjust an orientation of the mirror,
the lamp device controller includes

a receiver configured to receive a vehicle speed signal indicating a vehicle speed and a direction indication signal indicating an activation of a direction indicator and a direction of turning right or left, and
a detection area switcher configured to control the rotation/tilt controllers of the pair of lamp devices to adjust the orientation of the mirror and switch a detection area of the optical detection unit, and

when the vehicle speed is equal to or lower than a predetermined speed, the detection area switcher switches the detection area of the optical detection unit of at least one of the pair of lamp devices.

# FIG.1

# FIG.2

FIG.3

## FIG.4A

## FIG.4B

FIG.5

25
51 52 53

RW

LB

L0

25A

TF

FIG.6

25
51 55 53

RW

LB

L0

25A

TU

# FIG.7

# FIG.8

# FIG.9

# FIG.10

# FIG.11

OBSTACLE DETECTION CONTROL

S1 — IS VEHICLE SPEED V ≦ Vth ?
- NO
- YES

S2
- ·LiDAR−L → FRONT
- ·LiDAR−R → FRONT

S3 — IS DIRECTION INDICATOR ON ?
- NO
- YES

S4
- ·LiDAR−L → LEFT SIDE
- ·LiDAR−R: MAINTAIN (FRONT)

S5 — IS DIRECTION INDICATOR R OR L?
- L
- R

S6
- ·LiDAR−L → LEFT SIDE
- ·LiDAR−R: MAINTAIN (FRONT)

S7
- ·LiDAR−L: MAINTAIN (FRONT)
- ·LiDAR−R → RIGHT SIDE

FIG.12

<div align="center">

**INTERNATIONAL SEARCH REPORT**

</div>

| | International application No. |
|---|---|
| | **PCT/JP2022/045944** |

| A. | CLASSIFICATION OF SUBJECT MATTER |
|---|---|

*G01S 13/86*(2006.01)i; *F21S 45/00*(2018.01)i; *G01S 7/481*(2006.01)i; *G01S 13/931*(2020.01)i; *G08G 1/16*(2006.01)i
FI:    G01S13/86; F21S45/00; G01S13/931; G01S7/481 A; G08G1/16 C

According to International Patent Classification (IPC) or to both national classification and IPC

| B. | FIELDS SEARCHED |
|---|---|

Minimum documentation searched (classification system followed by classification symbols)

G01S 7/00 - G01S 7/51, G01S 13/00 - G01S 13/95, G01S 17/00 - G01S 17/95

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | EP 3715911 A1 (BAUMER ELECTRIC AG) 30 September 2020 (2020-09-30) | 1-8, 10-12, 17-18 |
| | paragraphs [0003], [0012]-[0015], [0033], [0049]-[0062], fig. 1-3, 5 | |
| Y | | 9, 13-16, 18 |
| A | | 19-22 |
| Y | JP 6-118159 A (MITSUBISHI ELECTRIC CORP) 28 April 1994 (1994-04-28) | 9 |
| | paragraph [0002], fig. 7 | |
| Y | WO 2020/075539 A1 (TOYODA GOSEI KK) 16 April 2020 (2020-04-16) | 13 |
| | paragraphs [0042]-[0043], [0119], [0146]-[0147] | |
| Y | WO 2019/203177 A1 (KOITO MANUFACTURING CO., LTD.) 24 October 2019 (2019-10-24) | 14-15 |
| | paragraphs [0007], [0019], fig. 4 | |
| Y | US 2020/0064483 A1 (SZ DJI TECHNOLOGY CO., LTD.) 27 February 2020 (2020-02-27) | 16, 18 |
| | paragraphs [0083], [0267]-[0282], fig. 17 | |
| A | | 19-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/045944** |

| Box No. III | Observations where unity of invention is lacking (Continuation of item 3 of first sheet) |
| --- | --- |

This International Searching Authority found multiple inventions in this international application, as follows:

(Invention 1) Claims 1-15, 17, 19-22
Claims 1 and 17 lack novelty in light of document 1: EP 3715911 A1 (BAUMER ELECTRIC AG) 2020 September 30 paragraphs [0003], [0012]-[0015], [0033], [0049]-[0062], fig. 1-3, 5,
and thus do not have a special technical feature [STF]. Therefore, claims 1-15, 17, and 19-22 configured of claims 1 and 17, and claims 2-15 and 19-22 dependent on claim 1 are classified as invention 1.

(Invention 2) Claim 16
Claim 16 has the STF from the feature in which a "field-of-vision range does not overlap with .... a field-of-vision rang." On the other hand, since said feature has an exclusive relationship with claim 1 of a "field-of-vision range overlaps with .... a field-of-vision range," claim 16 is not classified as invention 1 but classified as invention 2.

(Invention 3) Claim 18
Claim 18 has the STF from the feature of "comprising a rotation and tilt control unit capable of adjusting an orientation of a mirror." On the other hand, claim 18 does not have a feature of claim 1 classified as invention 1 of a "field-of-vision range overlaps with .... a field-of-vision rang," and a feature of claim 16 classified as invention 2 of a "field-of-vision range doe not overlap with .... a field-of-vision rang." Therefore, claim 18 is classified as neither invention 1 nor invention 2, but classified as invention 3.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (January 2015)

## INTERNATIONAL SEARCH REPORT
### Information on patent family members

International application No.

**PCT/JP2022/045944**

| Patent document cited in search report | | | Publication date (day/month/year) | Patent family member(s) | | | Publication date (day/month/year) |
|---|---|---|---|---|---|---|---|
| EP | 3715911 | A1 | 30 September 2020 | CN | 111751819 | A | |
| JP | 6-118159 | A | 28 April 1994 | (Family: none) | | | |
| WO | 2020/075539 | A1 | 16 April 2020 | JP | 2020-060406 | A | |
| WO | 2019/203177 | A1 | 24 October 2019 | (Family: none) | | | |
| US | 2020/0064483 | A1 | 27 February 2020 | US | 2021/0318444 | A1 | |
| | | | | WO | 2018/196001 | A1 | |
| | | | | CN | 110537109 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020104799 A
- WO 2019021693 A1
- WO 2021125044 A1
- JP 2021509467 W
- JP 5465030 B
- JP 6400062 B
- JP S63099285 U
- JP S6132979 U